# DEMANDE DE BREVET EUROPEEN

(11) **EP 0 877 254 A1**
(43) Date de publication de la demande: **11.11.1998**
(21) Numéro de dépôt: 98810279.4
(22) Date de dépôt: 31.03.1998
(51) Int. Cl.: G01P 5/07

(54) **Dispositif de mesure de la vitesse du vent et de l'ensoleillement**

(30) Priorité: 05.05.1997 FR 9705498
(71) Demandeur: SOMFY, F-74300 Cluses (FR)
(72) Inventeur: Jacquel, Dominique, 74300 Thiez (FR)
(74) Mandataire: Meylan, Robert Maurice

(57) **Abrégé**

Le dispositif comprend essentiellement un conducteur de lumière (2) monté entre un écran rotatif (1) entraîné par le vent et un détecteur optique (4) associé à des moyens (40) d'intégration du signal délivré par le détecteur optique. Ces moyens d'intégration délivrent deux grandeurs, respectivement représentatives de la vitesse du vent et de l'ensoleillement.

## Description

L'invention concerne un dispositif de mesure de la vitesse du vent et de l'ensoleillement.

Pour mesurer la vitesse du vent, on utilise, traditionnellement, un anémomètre équipé d'un moulinet. Avec le temps, la transmission mécanique de la rotation du moulinet a été remplacée par un élément codeur entraîné en rotation par le moulinet, tel qu'un aimant ou un disque perforé, ce codeur coopérant avec un détecteur approprié, par exemple une sonde à effet Hall, une ampoule reed, ou un détecteur optoélectronique, le détecteur donnant une image de la vitesse de rotation du moulinet, c'est-à-dire une image de la force du vent.

L'ensoleillement ou l'insolation est mesuré, également traditionnellement, au moyen d'une cellule photosensible.

Dans certaines circonstances, il est nécessaire de connaître à la fois la force du vent et le rayonnement solaire. C'est le cas, par exemple, d'un automatisme commandant une toile de store motorisée qu'il convient de déployer lorsque le soleil atteint une certaine intensité, et d'enrouler lorsque le vent atteint une certaine force, pour éviter l'endommagement de la toile. L'utilisation traditionnelle des dispositifs connus nécessite donc un détecteur pour détecter chacune des grandeurs physiques constituées respectivement de la force du vent et de l'ensoleillement. D'autre part, le dispositif de mesure de la vitesse ou force du vent nécessite une liaison électrique entre l'endroit où est monté le moulinet d'anémomètre et le boîtier de commande d'un automatisme, tel qu'un automatisme de commande de stores. Il en est de même pour la cellule photosensible. Les détecteurs nécessitent, en effet, un approvisionnement en énergie électrique pour réaliser les détections au niveau des capteurs. Or, ces liaisons électriques sont soumises aux perturbations parasitaires d'origine électromagnétique. Pour éviter ces parasites, il peut être nécessaire, dans certains cas, d'utiliser des conducteurs blindés coûteux et volumineux.

La présente invention a pour but de réaliser un dispositif de mesure de la vitesse du vent et de l'ensoleillement plus simple que les ensembles connus, tant au niveau du capteur qu'en ce qui concerne la liaison entre le capteur et le boîtier de commande d'un automatisme.

Le dispositif selon l'invention est caractérisé en ce qu'il comprend un détecteur optique, un conducteur de lumière, par exemple une fibre optique, dont une extrémité est reliée au détecteur optique et l'autre extrémité est exposée au rayonnement solaire, un élément rotatif entraîné en rotation par le vent et formant un écran tournant discontinu devant l'extrémité du conducteur de lumière exposée au soleil, de telle sorte que le rayonnement du conducteur de lumière atteignant le détecteur est modulé et des moyens d'intégration du signal fourni par le détecteur optique, délivrant, en fonction de cette modulation, une première grandeur représentative de la vitesse du vent et une seconde grandeur représentative de l'intensité du rayonnement solaire.

Le dispositif selon l'invention ne comprend donc qu'un seul détecteur pour les deux mesures. La liaison entre l'élément rotatif et le détecteur optique se réduit à un simple conducteur de lumière insensible aux parasites d'origine électromagnétique. Etant donné qu'il n'y a plus d'électronique au niveau de l'élément rotatif, il n'est plus nécessaire d'équiper ce niveau d'un circuit imprimé supportant des composants et des connecteurs.

L'élément rotatif formant écran discontinu peut être constitué par le moulinet lui-même d'un anémomètre ou par un élément distinct entraîné par un moulinet d'anémomètre.

Selon un mode d'exécution de l'invention, l'élément rotatif est en matériau ferromagnétique et tourne à proximité d'un aimant fixe positionné de telle sorte qu'en l'absence de vent, l'élément rotatif est maintenu dans une position telle que le conducteur de lumière est exposé au rayonnement solaire. Ceci permet d'éviter, qu'en l'absence de vent, l'élément rotatif, immobile, forme un écran permanent empêchant la détection de l'ensoleillement.

Selon un autre mode d'exécution, dans lequel l'élément rotatif à discontinuité est un élément distinct d'un moulinet d'anémomètre, un second conducteur de lumière traverse axialement le moyeu du moulinet de manière à capter de façon continue le rayonnement solaire par l'une de ses extrémités. L'autre extrémité de ce conducteur de lumière est située en face de l'extrémité du premier conducteur de lumière et l'élément rotatif discontinu tourne entre les deux conducteurs de lumière.

Selon un perfectionnement de l'invention destiné à permettre la détection de la vitesse du vent en période nocturne, un second conducteur de lumière forme un embranchement du premier conducteur de lumière en direction du capteur optique et une source de lumière artificielle auxiliaire est située en face de l'extrémité de cet embranchement. La surface de l'élément rotatif passant devant l'extrémité du conducteur de lumière est réfléchissante, de telle manière que la lumière artificielle transmise par le seconde fibre optique est réfléchie, de façon modulée, par le second conducteur de lumière sur l'extrémité du premier conducteur de lumière.

Au lieu d'un embranchement, il est possible d'utiliser un second conducteur de lumière totalement indépendant du premier, entre la source de lumière artificielle et l'élément rotatif.

Le dessin annexé représente, à titre d'exemple, quelques modes d'exécution correspondant aux modes d'exécution mentionnés ci-dessus.

La figure 1 représente schématiquement une installation de commande d'un store motorisé équipée d'un dispositif selon l'invention dans lequel l'écran rotatif discontinu est constitué d'un moulinet d'anémomètre.

La figure 2 représente un moulinet d'anémomètre associé à un élément rotatif auxiliaire.

La figure 3 illustre le principe du positionnement magnétique d'un élément rotatif à l'arrêt.

La figure 4 représente une modification de l'un des modes d'exécution précédents, pour son fonctionnement nocturne.

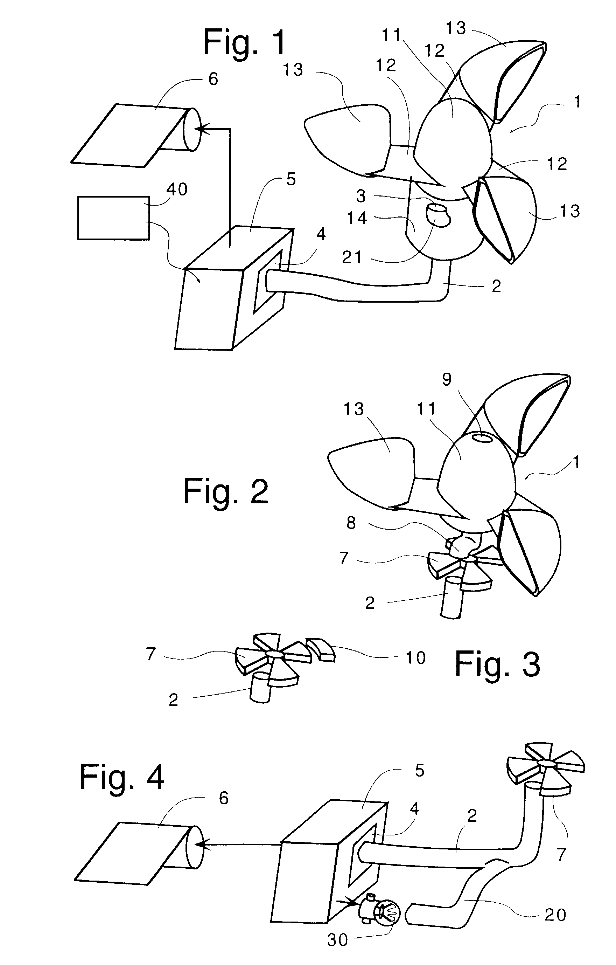

A la figure 1, on reconnaît un moulinet d'anémomètre 1 monté rotativement autour d'un axe vertical sur un support fixe 14. Le moulinet 1 comprend un moyeu 11 sur lequel sont fixés trois bras 12 à l'extrémité desquels sont fixés trois aubes 13, connues également sous la désignation de coupelles ou gobelets. Sur la face latérale du support 2 débouche l'extrémité 21 d'un conducteur de lumière constitué d'une fibre optique 2 dans l'exemple considéré. Cette extrémité peut être munie d'une lentille 3 pour concentrer les rayons solaires. Lorsqu'elle n'est pas située sous l'un des bras 12 du moulinet, l'extrémité 21 de la fibre optique est exposée au rayonnement solaire et une partie des rayons solaires pénètre dans la fibre optique 2. La fibre optique 2 est reliée à une détecteur 4 constitué d'une cellule photoélectrique montée dans un boîtier de commande 5 chargé de piloter une toile de store motorisée 6.

Le moulinet 1 constitue, par ses bras 12, un écran discontinu entre le soleil et la fibre optique 2. Ainsi, lors de la rotation du moulinet, la quantité de rayons lumineux pénétrant dans la fibre optique 2 est modulée à une fréquence image de la vitesse de rotation du moulinet 1, c'est-à-dire de la vitesse ou plus exactement de la force du vent. Cette lumière modulée est détectée par la cellule 4 et traitée par les moyens de traitement contenus dans le boîtier 5, en particulier des moyens d'intégration du signal modulé délivré par la cellule 4. De tels moyens sont bien connus en soi et ne seront donc pas décrits en détails ici. Le signal reçu est constitué d'une tension électrique analogique traduisant le niveau de luminosité découpé à une fréquence représentant l'image de la vitesse du vent. Le signal modulé délivré par la cellule 4 renseigne donc aussi bien sur la vitesse de rotation du moulinet 1, que sur la quantité de lumière captée par la fibre optique .

Au lieu d'utiliser directement le moulinet anémométrique 1 comme écran tournant discontinu, il est possible d'associer à ce moulinet un élément tournant auxiliaire entraîné en rotation par le moulinet. Un exemple d'exécution est représenté à la figure 2. L'élément tournant auxiliaire est constitué d'un disque codeur 7 découpé en secteurs et tournant entre une extrémité de la fibre optique 2 et l'extrémité inférieure d'une seconde fibre optique 8 ou autre conducteur de lumière traversant axialement le moyeu 11 du moulinet 1 et affleurant la surface du moyeu 11. Cette extrémité peut également être munie à son extrémité supérieure d'une lentille 9.

Dans les modes d'exécution représentés aux figures 1 et 2, en l'absence de vent, il peut arriver qu'un bras 12 du moulinet, respectivement un secteur du disque codeur 7, s'immobilise en face de l'extrémité de la fibre optique 2 Dans ce cas, la détection de l'ensoleillement n'est plus possible. Il est possible de remédier à cet inconvénient, par exemple en utilisant un moulinet, respectivement un disque codeur en matériau ferromagnétique et un aimant de positionnement, ainsi que représenté à la figure 3 dans le cadre d'un disque codeur 7. Le positionnement au repos est assuré par un aimant permanent 10 d'une force telle et situé à une distance telle du disque codeur que le freinage du moulinet est insignifiant, mais qu'en l'absence de vent, le disque codeur, respectivement le moulinet est maintenu dans une position telle qu'il ne forme pas écran entre le rayonnement solaire et l'extrémité de la fibre optique 2.

Dans les modes d'exécution décrits jusqu'ici, la vitesse du vent ne peut être détectée que de jour puisqu'elle nécessite une illumination solaire de l'extrémité de la fibre optique exposée au rayonnement solaire. Dans certains cas, il peut être souhaitable de surveiller la force du vent également de nuit.

La figure 4 illustre une solution très simple à ce problème. Le dispositif représenté schématiquement peut être considéré comme un perfectionnement du mode d'exécution représenté à la figure 2. Le moulinet 1 et la seconde fibre optique n'ont pas été représentés. La fibre optique 2 présente un embranchement 20 s'étendant en direction du boîtier de commande et dont le départ peut être proche du boîtier de commande. En face de l'extrémité de cet embranchement 20 est disposée une source de lumière artificielle 30. La face inférieure du disque codeur 7 est réfléchissante. De nuit, la source de lumière 30 envoie des rayons lumineux dans l'embranchement 20. Ces rayons lumineux sont transmis plus loin par la fibre optique 2 et sont réfléchis par le disque codeur 7 dans la fibre optique 2, qui conduit cette lumière réfléchie à la cellule 4. Cette lumière réfléchie est modulée de la même manière que la lumière solaire. De jour, la lumière solaire est détectée par la cellule 4, ce qui permet au boîtier de commande 5 de ne pas alimenter la source de lumière 30. Par ailleurs, la lumière solaire modulée est conduite par la fibre optique 2 comme dans les exemples précédents.

Le même résultat peut être obtenu au moyen d'un second conducteur de lumière, par exemple une fibre optique, totalement indépendant du premier conducteur de lumière et s'étendant entre le disque codeur 7 et la source de lumière 30.

## Revendications

1. Dispositif de mesure de la vitesse du vent et de l'ensoleillement, caractérisé en ce qu'il comprend un détecteur optique (4), un conducteur de lumière (2) dont une extrémité est reliée au détecteur optique et l'autre extrémité est exposée au rayonnement solaire, un élément rotatif (1 ; 7) entraîné en rotation par le vent et formant un écran tournant discontinu devant l'extrémité du conducteur de lumière exposée au soleil, de telle sorte que le rayonnement atteignant le détecteur est modulé, et des moyens d'intégration du signal fourni par le détecteur optique, délivrant, en fonction de cette modulation, une première grandeur représentative de la vitesse du vent et une seconde grandeur représentative de l'intensité du rayonnement solaire.

2. Dispositif selon la revendication 1, caractérisé en ce que l'élément rotatif formant écran discontinu est constitué d'un moulinet anémométrique (1).

3. Dispositif selon la revendication 1, caractérisé en ce que l'élément rotatif formant écran discontinu est constitué d'un disque codeur auxiliaire (7).

4. Dispositif selon l'une des revendications 1 à 3, caractérisé en ce que l'élément rotatif (1 ; 7) est en matériau ferromagnétique et tourne à proximité d'un aimant permanent fixe (10) positionné de telle sorte, qu'en l'absence de vent, l'élément rotatif est maintenu dans une position telle que le conducteur de lumière est exposé au rayonnement solaire.

5. Dispositif selon la revendication 3, caractérisé en ce que le disque codeur (7) est entraîné en rotation par un moulinet anémométrique (1) et en ce que le dispositif comprend un second conducteur de lumière (8) traversant axialement le moyeu du moulinet de manière à capter de façon continue le rayonnement solaire, une extrémité de ce second conducteur de lumière étant située en face de l'extrémité du premier conducteur de lumière (2), le disque codeur (7) tournant entre les deux conducteurs de lumière.

6. Dispositif selon l'une des revendications 1 à 5, caractérisé en ce que le conducteur de lumière présente un embranchement (20) dirigé en direction du détecteur optique et que le dispositif comprend une source de lumière artificielle auxiliaire (30) disposée en face de l'extrémité de cet embranchement, de telle manière que la lumière artificielle transmise par ledit embranchement (20) et par le conducteur de lumière (2) est réfléchie, de manière modulée, par l'élément rotatif sur l'extrémité du conducteur de lumière (2).

7. Dispositif selon l'une des revendications 1 à 5, caractérisé en ce qu'il comprend un second conducteur de lumière entre une source de lumière artificielle auxiliaire (30) et l'élément rotatif (7), de telle manière que la lumière artificielle transmise par ce second conducteur de lumière est réfléchie, de manière modulée, par l'élément rotatif sur l'extrémité du premier conducteur de lumière (2).
